# EUROPEAN PATENT SPECIFICATION

(11) **EP 2 112 348 B1**
(45) Date of publication and mention of the grant of the patent: **08.02.2012**
(21) Application number: 09158482.1
(22) Date of filing: 22.04.2009
(51) Int. Cl.: F02B 23/10, F02B 23/06

(54) **Direct fuel injection engine**
Direkteinspritzmotor
Moteur à injection directe de carburant

(30) Priority: 23.04.2008 JP 2008112447; 23.04.2008 JP 2008112449
(43) Date of publication of application: 28.10.2009
(73) Proprietor: Honda Motor Co., Ltd., Minato-ku Tokyo 107-8556 (JP)
(72) Inventor: Kaneko, Yoshimasa, Saitama 351-0193 (JP); Sono, Hiroshi, Saitama 351-0193 (JP); Tajima, Yutaka, Saitama 351-0193 (JP); Ikeya, Kenichiro, Saitama 351-0192 (JP); Katayama, Goichi, Saitama 351-0193 (JP); Sasaki, Nobuhiko, Saitama 351-0193 (JP); Yamaya, Yukihisa, Saitama 351-0193 (JP); Yamaguchi, Akihiro, Saitama 351-0193 (JP); Tachikawa, Takehisa, Saitama 351-0193 (JP); Katano, Takahiro, Saitama 351-0193 (JP)
(74) Representative: Herzog, Markus

(56) References cited:
- EP-A1- 1 469 193
- DE-A1-102006 020 642
- JP-A- 4 228 821
- US-B1- 6 553 960

## Description

### FIELD OF THE INVENTION

The present invention relates to a direct fuel injection engine comprising a piston having a top face with a height in a piston central axis direction that varies in the circumferential direction, a cavity recessed in a central part of the top face of the piston, and a fuel injector for injecting fuel into the cavity.

### DESCRIPTION OF THE RELATED ART

An arrangement in which a fuel injection hole provided in an extremity portion of a fuel injector for a direct fuel injection engine is formed as a long hole that is long in the circumferential direction, thus enlarging the fuel spray angle when viewed in a piston central axis direction, is known from JP-U-60-159884.

The present applicant has proposed in JP-A-2008-002443, corresponding to EP-A-2034157, (hereinafter, called "the invention of the prior application") a direct fuel injection diesel engine equipped with a pentroof-shaped piston in which, by forming the cross-sectional shape of a piston cavity so as to be substantially identical in any half plane passing through the piston central axis, thereby making the conditions under which air and fuel are mixed within the cavity uniform in the circumferential direction, the combustion conditions for the gas mixture are improved.

However, even when the cross-sectional shape of the cavity in any half plane passing through the piston central axis is made substantially identical, if there are within the cavity a region where fuel is injected via the fuel injector and a region where it is not, it is difficult to make the conditions under which air and fuel are mixed completely uniform in the circumferential direction, and there is therefore a desire for making the conditions of mixing more uniform.

Furthermore, an arrangement is known from JP-A-07-208303, corresponding to EP-A-0661447, in which fuel injection holes provided in an extremity portion of a fuel injector for a direct fuel injection engine are formed by a plurality of large diameter fuel injection holes and a plurality of small diameter fuel injection holes, the large diameter fuel injection holes and the small diameter fuel injection holes being disposed alternately in the circumferential direction, thereby making the conditions under which air and fuel are mixed within the cavity uniform.

When a swirl is not produced in intake air in a direct fuel injection diesel engine equipped with a pentroof-shaped piston, there is a possibility that air and fuel injected from the fuel injector will not be mixed uniformly, and the combustion conditions for the gas mixture will be degraded.

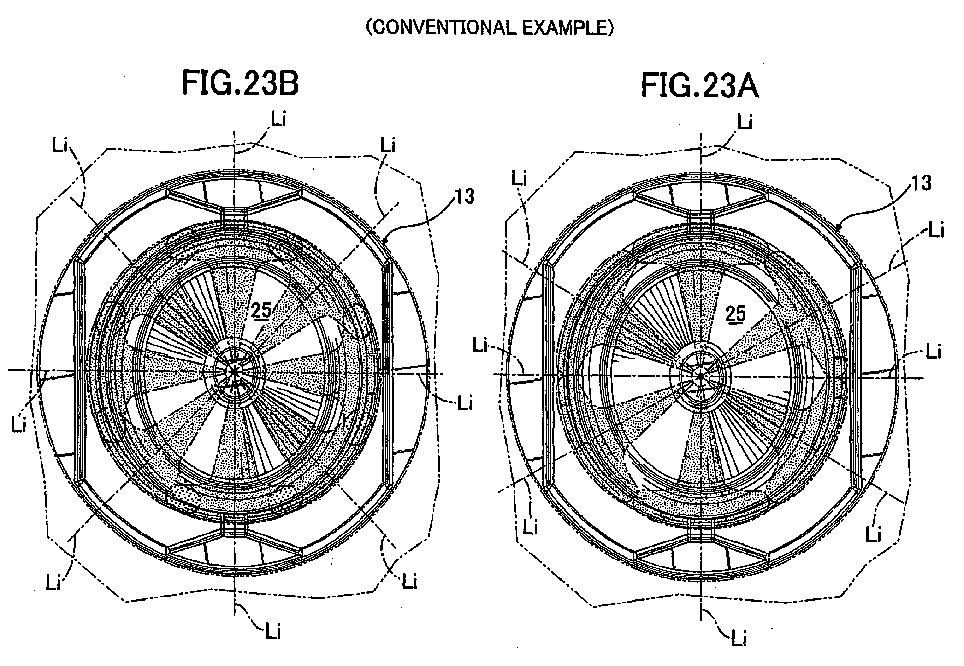

For example, as shown in FIG. 23A, when fuel is injected into a cavity 25 of a piston 13 from a fuel injector along six fuel injection axes Li at intervals of 60°, there is still the problem that unused air that has not mixed with fuel remains between adjacent fuel injection axes Li. In order to minimize the unused air, as shown in FIG. 23B, if the number of fuel injection axes Li is increased (e.g. eight axes), there is the problem that fuel that has collided with an inner peripheral face of the cavity 25 and has diffused in the circumferential direction mutually overlaps, thus causing a local region having a high fuel concentration and, moreover, fuel that is present in this region overflows outside the cavity 25 due to reverse squish flow.

EP 1 469 193 A1 discloses a direct fuel injection engine comprising a piston having a top face with a height in a piston central axis direction that varies in the circumferential direction, a cavity recessed in a central part of the top face of the piston, and a fuel injector for injecting fuel into the cavity, the shape of an inner wall face of the cavity being set so that, with N as a natural number of 2 or more, when the cavity is divided into N virtual cavity sections by the inner wall face of the cavity and N half planes extending radially from the piston central axis and having equal included angles, the volumes of the virtual cavity sections are substantially equal, the number N of virtual cavity sections being set so as to be equal to the number of fuel injection axes of the fuel injector, the bisector of the included angle coinciding with the fuel injection axis when viewed in the piston central axis direction, and a fuel spray angle of the fuel injection axes coinciding with the included angle. The combustion chamber 36 is of the shallow-dish type. The piston is formed to have a top face with a height in a piston central direction that does not vary in the circumferential direction.

### SUMMARY OF THE INVENTION

The present invention has been accomplished in the light of the above-mentioned circumstances, and it is an object thereof to provide a direct fuel injection engine equipped with a pentroof-shaped piston, in which the conditions under which air and fuel are mixed within a cavity are made uniform in the circumferential direction.

In order to achieve this object, according to a first aspect of the present invention, there is provided a direct fuel injection engine comprising a piston having a top face with a height in a piston central axis direction that varies in the circumferential direction, a cavity recessed in a central part of the top face of the piston, and a fuel injector for injecting fuel into the cavity, the shape of an inner wall face of the cavity being set so that, with N as a natural number of 2 or more, when the cavity is divided into N virtual cavity sections by the inner wall face of the cavity and N half planes extending radially from the piston central axis and having equal included angles, the volumes of the virtual cavity sections are substantially equal, the number N of virtual cavity sections being set so as to be equal to the number of fuel injection axes of the fuel injector, the bisector of the included angle coinciding with the fuel injection axis when viewed in the piston central axis direction, and a fuel spray angle of the fuel injection axes coinciding with the included angle.

In accordance with the above arrangement, the shape of the inner wall face of the cavity recessed in the central part of the piston top face is set so that, when the cavity is divided into N virtual cavity sections by the inner wall face of the cavity and N half planes extending radially from the piston central axis and having equal included angles, the volumes of the virtual cavity sections are substantially identical, and in addition the number N of cavity sections is made equal to the number of fuel injection axes and the bisector of the included angle of the cavity sections when viewed in a piston central axis direction is made to coincide with the fuel injection axis; it is therefore possible to make the conditions under which air and fuel are mixed in the cavity uniform in the circumferential direction, thereby improving the engine output and reducing harmful exhaust materials. Moreover, since the fuel spray angle of the fuel injection axis is made to coincide with the included angle, there is no region in the interior of the cavity where fuel is not sprayed or where fuel is overlappingly sprayed, and due to the synergistic effect with the cavity sections being made to have equal volumes, it is possible to minimize unused air in the cavity, thereby making the conditions under which air and fuel are mixed more uniform.

According to a further of the first aspect of the present invention, among a plurality of fuel injection axes spaced in the circumferential direction of the fuel injector, a cross-section of the cavity passing through an nth fuel injection axis is defined as a fuel injection cross-section Sn, an intersection point of the fuel injection cross-section Sn with the opening peripheral edge of the cavity is defined as a first specific point An, a second specific point Bn is present on a line that passes through the first specific point An and is parallel to a lower face of a cylinder head in the fuel injection cross-section Sn, a third specific point Cn is present on a bottom wall portion of the cavity in the fuel injection cross-section Sn, a distance between the second specific point Bn and the piston central axis is shorter than a distance between the first specific point An and the piston central axis, a distance between the third specific point Cn and the piston central axis is shorter than a distance between the piston central axis and the maximum outer diameter of the bottom wall portion of the cavity, and a cross-sectional shape surrounded by a first specific path AnBn connecting the first and second specific points An and Bn, a line along the lower face of the cylinder head in the fuel injection cross-section Sn, a second specific path AnCn connecting the first and third specific points An and Cn along a wall face of the cavity in the fuel injection cross-section Sn, and a third specific path BnCn connecting the second and third specific points Bn and Cn by the shortest straight line, which is substantially equal for each fuel injection cross-section Sn, is defined as a reference cross-sectional shape, the volume of each virtual cavity section is made substantially equal by changing the shape of the inner wall face of the cavity so that the reference cross-sectional shape enlarges for the fuel injection cross-section Sn passing through a fuel injection axis that is present in a direction where the height of the top face of the piston in the piston central axis direction is lower.

In accordance with the above arrangement, with the cross-sectional shape of the cavity of the invention of the prior application as a reference cross-sectional shape, by changing the shape of the inner wall face of the cavity so that the reference cross-sectional shape enlarges for the fuel injection cross-section Sn passing through the fuel injection axis that is present in the direction where the height of the piston top face in the piston central axis direction is lower, the virtual cavity sections are made to have substantially equal volumes, and compared with the invention of the prior application, the conditions under which air and fuel are mixed in the injection cross-sections Sn can therefore be made more uniform.

According to an optional feature of the first aspect of the present invention, the top face of the piston is formed in a pentroof shape.

In accordance with the above arrangement, since the piston top face is formed in a pentroof shape, it is possible to enhance intake/exhaust efficiency by enlarging the area of an opening of the valve hole.

According to a preferred aspect of the present invention, there is provided a direct fuel injection engine comprising a piston having a top face with a height in a piston central axis direction that varies in the circumferential direction, a cavity recessed in a central part of the top face of the piston, and a fuel injector for injecting fuel into the cavity, the shape of an inner wall face of the cavity being set so that, with N as a natural number of 2 or more, when the cavity is divided into N virtual cavity sections by the inner wall face of the cavity and N half planes extending radially from the piston central axis and having equal included angles, the volumes of the virtual cavity sections are substantially equal, the fuel injector comprising a plurality of fuel injection holes having different inner diameters, the plurality of fuel injection holes comprising at least two large diameter fuel injection holes having high penetration and at least one small diameter fuel injection hole that has a smaller diameter than that of the large diameter fuel injection hole and has low penetration, and the small diameter fuel injection hole being disposed between two of the large diameter fuel injection holes that are adjacent in the circumferential direction.

In accordance with the above arrangement, since the shape of the inner wall face of the cavity recessed in the central part of the piston top face is set so that, when the cavity is divided into N virtual cavity sections by the inner wall face of the cavity and N half planes extending radially from the piston central axis and having equal included angles, the volumes of the virtual cavity sections are substantially identical, it is possible to make the conditions under which air and fuel are mixed in the cavity uniform in the circumferential direction, thereby improving the engine output and reducing harmful exhaust materials. Moreover, since the plurality of fuel injection holes provided in the fuel injector so as to have different inner diameters are formed by at least two large diameter fuel injection holes having high penetration and at least one small diameter fuel injection hole having a diameter smaller than that of the large diameter fuel injection hole and having low penetration, and the small diameter fuel injection hole is disposed between two of the large diameter fuel injection holes that are adjacent in the circumferential direction, it is possible to spread a fuel spray injected via the small diameter fuel injection hole into a space where a fuel spray injected via the large diameter fuel injection hole does not spread, to prevent a fuel spray injected from the large diameter fuel injection hole from overlapping a fuel spray injected from the small diameter fuel injection hole, and to minimize unused air while preventing spray from overflowing from the cavity, and due to the synergistic effect with the cavity sections being made to have equal volumes, it is possible to make the conditions under which air and fuel are mixed in the cavity more uniform.

According to a first optional feature of the second aspect of the present invention, the number of large diameter fuel injection holes provided is N, which is the same as the number of virtual cavity sections, when viewed in the piston central axis direction each large diameter fuel injection hole is oriented in the direction of the bisector of the included angle of the corresponding virtual cavity section, and the small diameter fuel injection hole is oriented between two directions oriented by large diameter fuel injection holes that are adjacent in the circumferential direction.

In accordance with the above arrangement, since the fuel injector is provided with a plurality of large diameter fuel injection holes having high penetration and a small diameter fuel injection hole having low penetration, and with regard to the N large diameter fuel injection holes, when viewed in the piston central axis direction, each of the large diameter fuel injection holes is oriented in the direction of the bisector of the included angle of the corresponding virtual cavity section, and the small diameter fuel injection hole is oriented between the two directions in which circumferentially adjacent large diameter fuel injection holes are oriented, it is possible to spread a fuel spray injected via the small diameter fuel injection hole into a space where a fuel spray injected via the large diameter fuel injection hole does not spread, to prevent a fuel spray injected from the large diameter fuel injection hole from overlapping a fuel spray injected from the small diameter fuel injection hole, and to minimize unused air while preventing spray from overflowing from the cavity, and due to the synergistic effect with the cavity sections being made to have equal volumes, it is possible to make the conditions under which air and fuel are mixed in the cavity more uniform.

According to a second optional feature of the second aspect of the present invention, the small diameter fuel injection hole is provided at the middle position between the circumferentially adjacent large diameter fuel injection holes.

In accordance with the above arrangement, since one small diameter fuel injection hole is provided for the middle position of large diameter fuel injection holes that are adjacent in the circumferential direction of the fuel injector, it is possible to evenly spread a fuel spray injected via the small diameter fuel injection hole into a space where a fuel spray injected via the large diameter fuel injection hole does not spread.

As an alternative to the second optional feature of the second aspect of the present invention, according to a third optional feature of the second aspect of the present invention, a plurality of small diameter fuel injection holes are provided between the circumferentially adjacent large diameter fuel injection holes.

In accordance with the above arrangement, since a plurality of small diameter fuel injection holes are provided between large diameter fuel injection holes that are adjacent in the circumferential direction of the fuel injector, it is possible to evenly spread a fuel spray injected via the small diameter fuel injection hole into a space where a fuel spray injected via the large diameter fuel injection hole does not spread.

According to a fourth feature of the second aspect of the present invention, the top face of the piston is formed in a pentroof shape.

In accordance with the above arrangement, since the piston top face is formed in a pentroof shape, it is possible to enhance intake/exhaust efficiency by enlarging the area of an opening of the valve hole.

The above description, other objects, characteristics and advantages of the present invention will be clear from detailed descriptions which will be provided for the preferred embodiments referring to the attached drawings.

### BRIEF DESCRIPTION OF THE DRAWINGS

FIG. 1 to FIG. 13 show a first embodiment of the present invention;
FIG. 1 is a vertical sectional view of an essential part of a diesel engine,
FIG. 2 is a view from arrowed line 2-2 in FIG. 1,
FIG. 3 is a view from arrowed line 3-3 in FIG. 1,
FIG. 4 is an enlarged view of part 4 in FIG. 1,
FIG. 5 is an enlarged sectional view along line 5-5 in FIG. 4,
FIG. 6 is a perspective view of an upper part of a piston,
FIG. 7 is a sectional view along line 7-7 in FIG. 3,
FIG. 8 is a sectional view along line 8-8 in FIG. 3,
FIG. 9 is a sectional view along line 9-9 in FIG. 3,
FIG. 10 is a view, corresponding to FIG. 7, showing a cross-sectional shape of a cavity after correction,
FIG. 11 is a view, corresponding to FIG. 8, showing a cross-sectional shape of a cavity after correction,
FIG. 12 is a view for explaining virtual cavity sections, and
FIG. 13 is a graph showing the rate of change in volume of the cavity section when the direction of the cavity section is changed in the circumferential direction.
FIG. 14 is a view, corresponding to FIG. 3, related to a second embodiment of the present invention.
FIG. 15 to FIG. 19 show a third embodiment of the present invention;

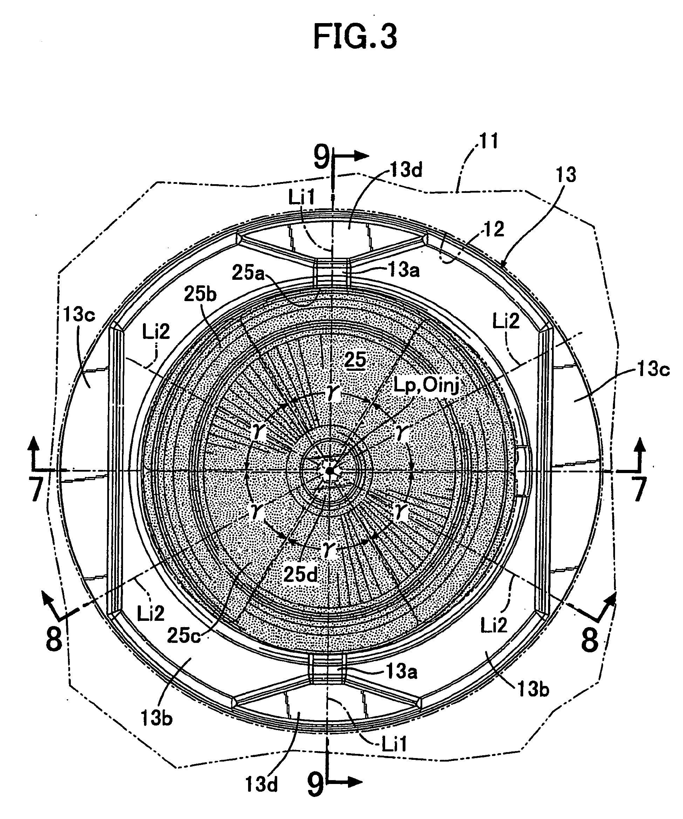

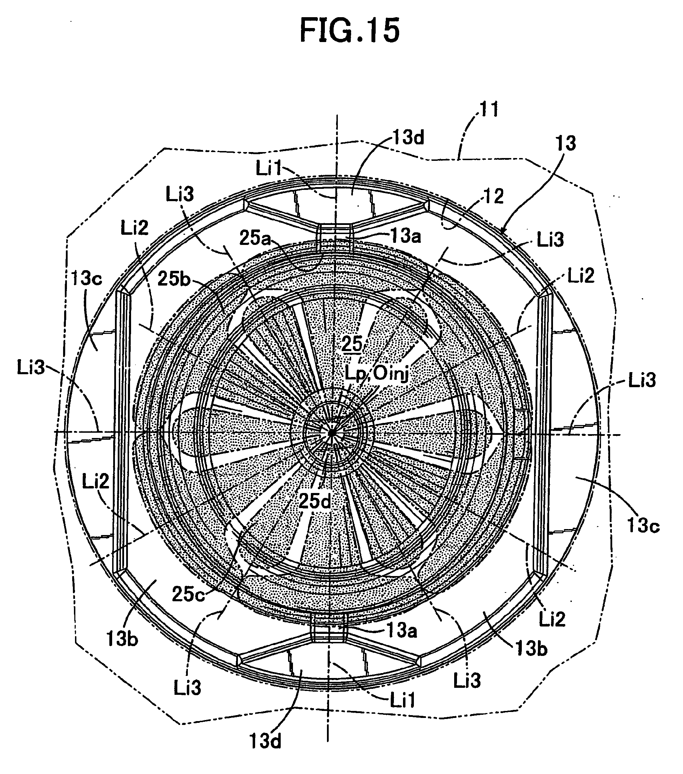

FIG. 15 is a view corresponding to FIG. 3,

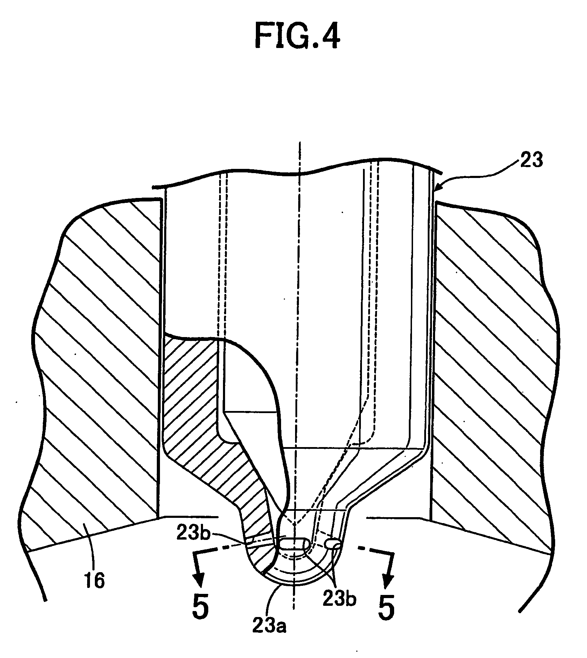

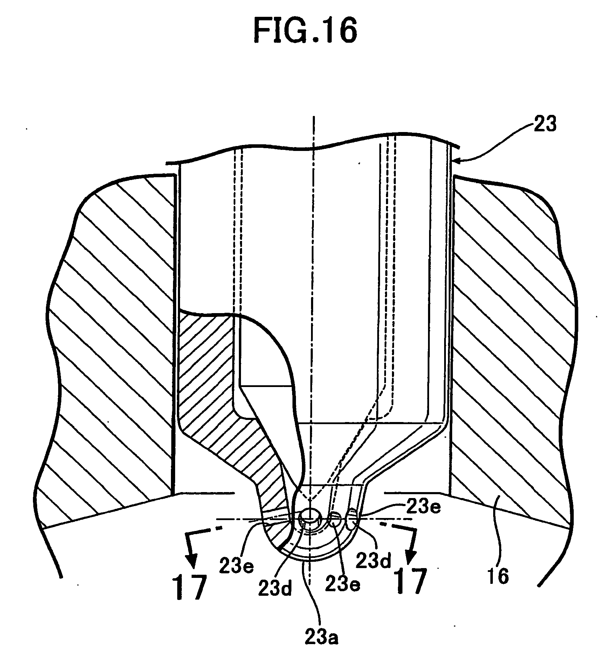

FIG. 16 is a view corresponding to FIG. 4,

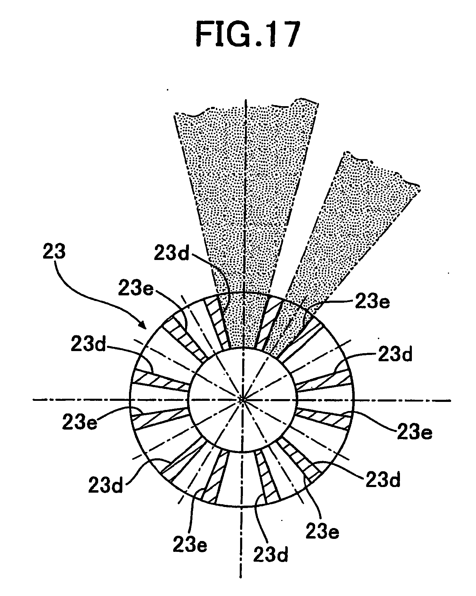

FIG. 17 is an enlarged sectional view along line 17-17 in FIG. 16,

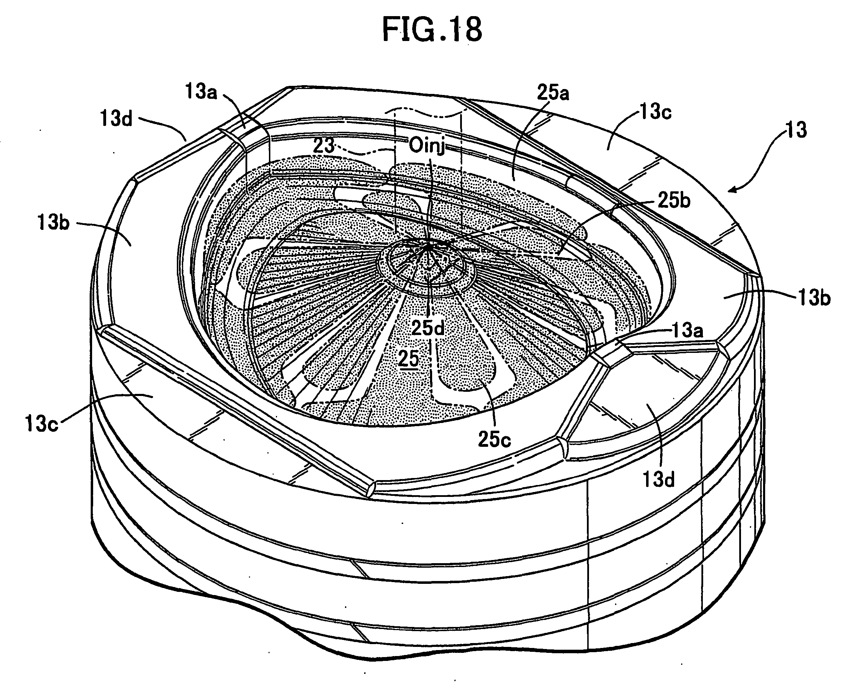

FIG. 18 is a perspective view of an upper part of a piston, and

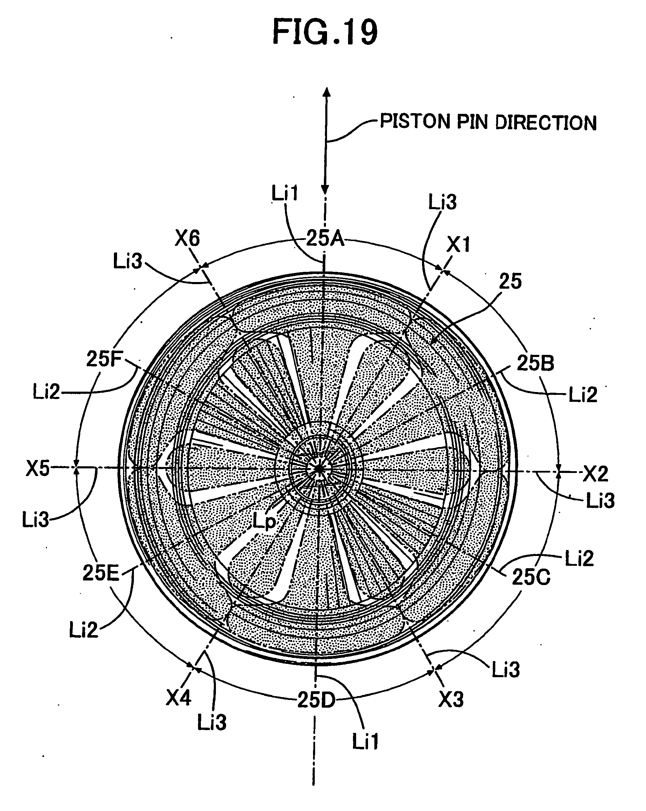

FIG. 19 is a view for explaining virtual cavity sections.

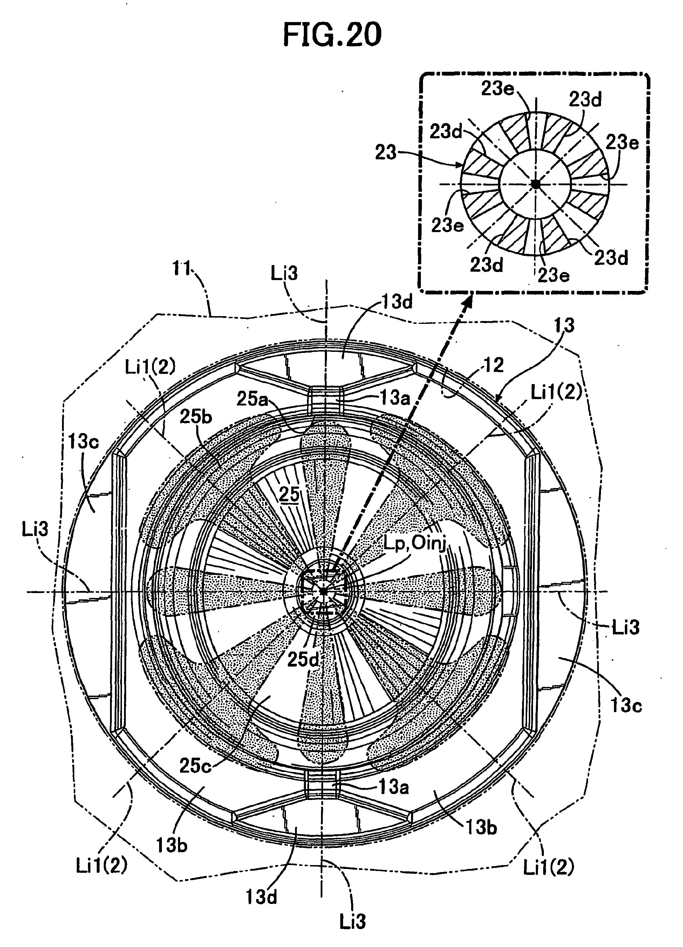

FIG. 20 is a view, corresponding to FIG. 3, related to a fourth embodiment of the present invention.

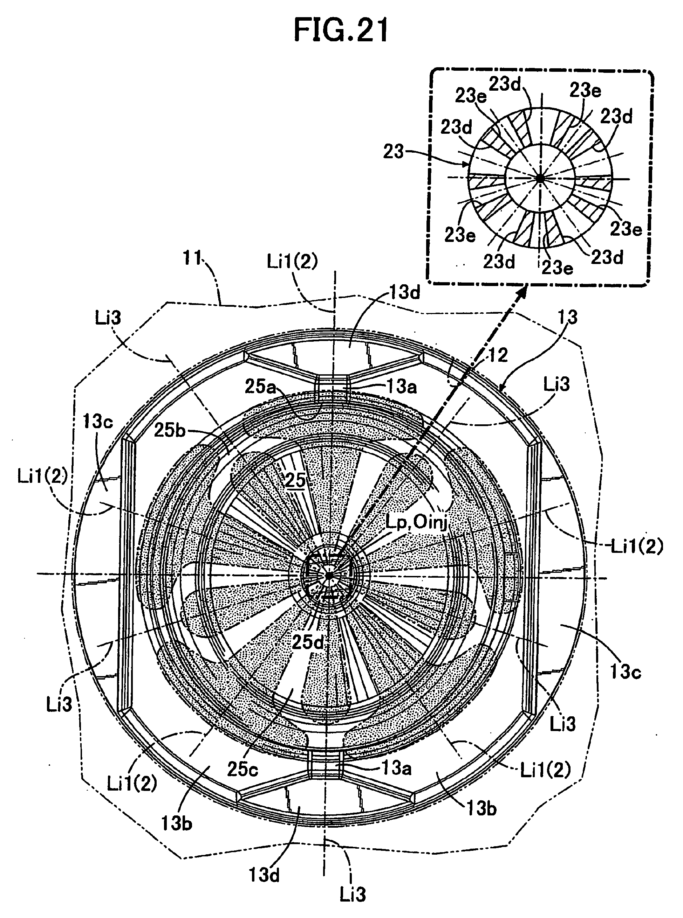

FIG. 21 is a view, corresponding to FIG. 3, related to a fifth embodiment of the present invention.

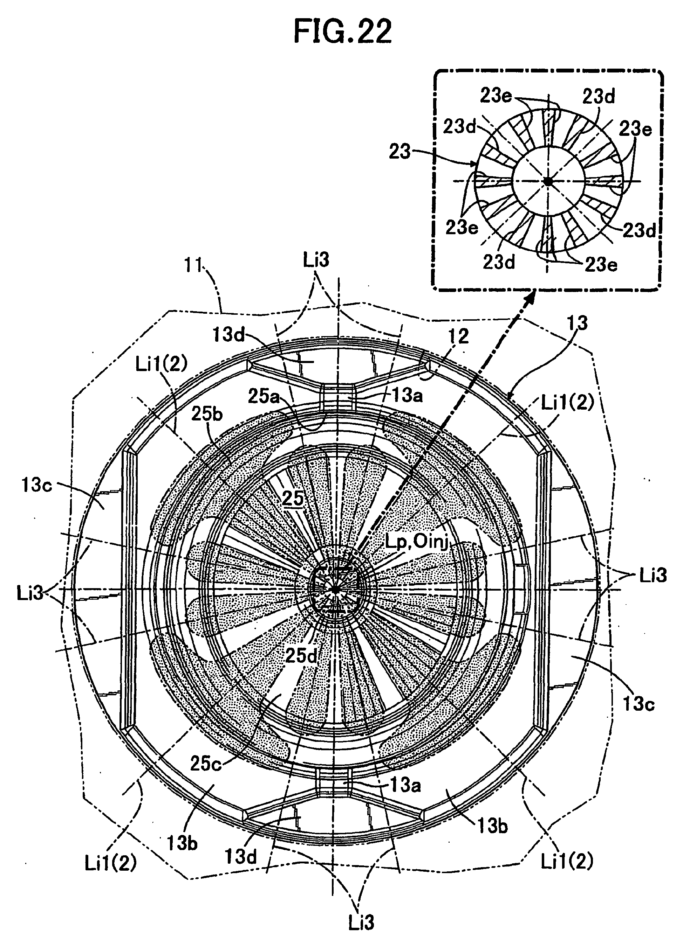

FIG. 22 is a view, corresponding to FIG. 3, related to a sixth embodiment of the present invention.
FIG. 23A and FIG. 23B are views, corresponding to FIG. 3, for explaining the problems of conventional examples.

### DESCRIPTION OF THE PREFERRED EMBODIMENT

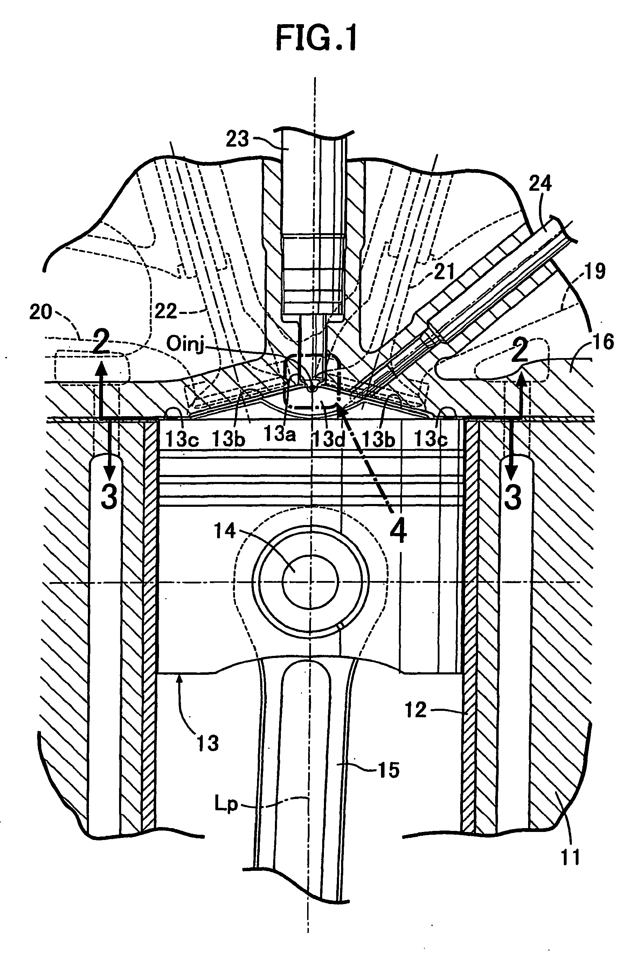

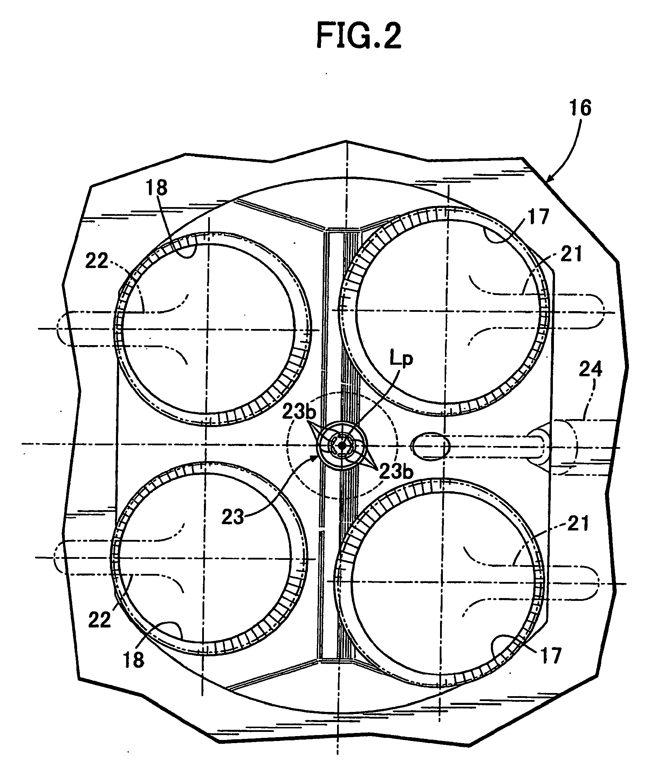

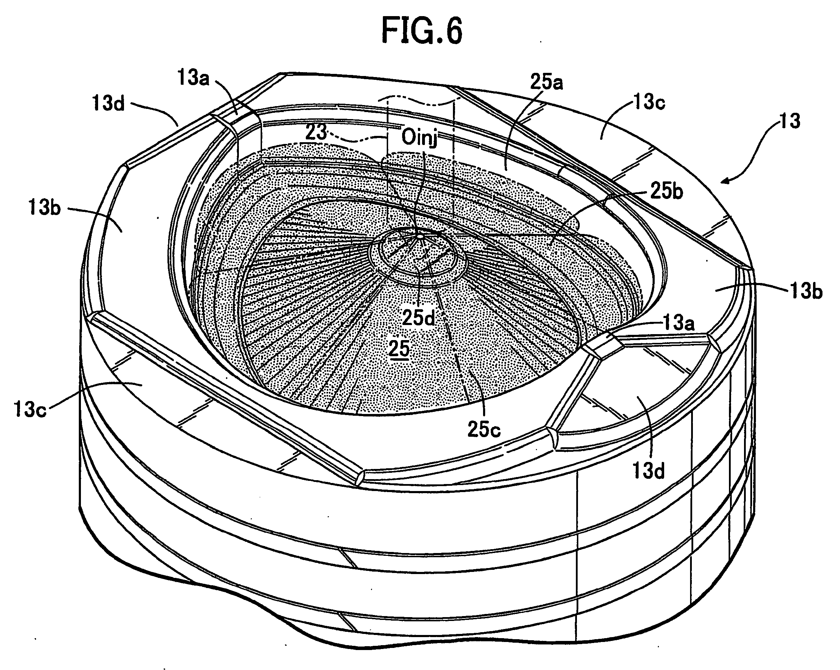

A first embodiment of the present invention is explained below by reference to FIG. 1 to FIG. 13.

As shown in FIG. 1 to FIG. 6, a direct fuel injection type diesel engine includes a piston 13 slidably fitted into a cylinder 12 formed in a cylinder block 11, and the piston 13 is connected to a crankshaft (not illustrated) via a piston pin 14 and a connecting rod 15. Two intake valve holes 17 and 17 and two exhaust valve holes 18 and 18 facing a top face of the piston 13 open in a lower face of a cylinder head 16, which is joined to an upper face of the cylinder block 11, an intake port 19 communicates with the intake valve holes 17 and 17, and an exhaust port 20 communicates with the exhaust valve holes 18 and 18. The intake valve holes 17 and 17 are opened and closed by intake valves 21 and 21, and the exhaust valve holes 18 and 18 are opened and closed by exhaust valves 22 and 22. A fuel injector 23 is provided so as to be positioned on a piston central axis Lp, and a glow plug 24 is provided so as to be adjacent to the fuel injector 23.

The top face of the piston 13 and the lower face of the cylinder head 16 facing it are not flat but are inclined in a pentroof shape with a triangular cross-section, and due to this shape it is possible to reduce the curvature of the intake port 19 and the exhaust port 20, guarantee a sufficiently large diameter for the intake valve holes 17 and 17 and the exhaust valve holes 18 and 18, and enhance the intake efficiency and the exhaust efficiency.

A cavity 25 with the piston central axis Lp as its center axis is recessed in the top face of the piston 13. Formed radially outside the cavity 25 are a pair of inclined faces 13b and 13b inclined downward to the intake side and the exhaust side from top portions 13a and 13a extending linearly parallel to the piston pin 14, a pair of flat faces 13c and 13c formed in the vicinity of the lower end of the inclined faces 13b and 13b so as to be perpendicular to the piston central axis Lp, and a pair of cutout portions 13d and 13d formed by cutting out opposite ends of the top portions 13a and 13a so as to be flat.

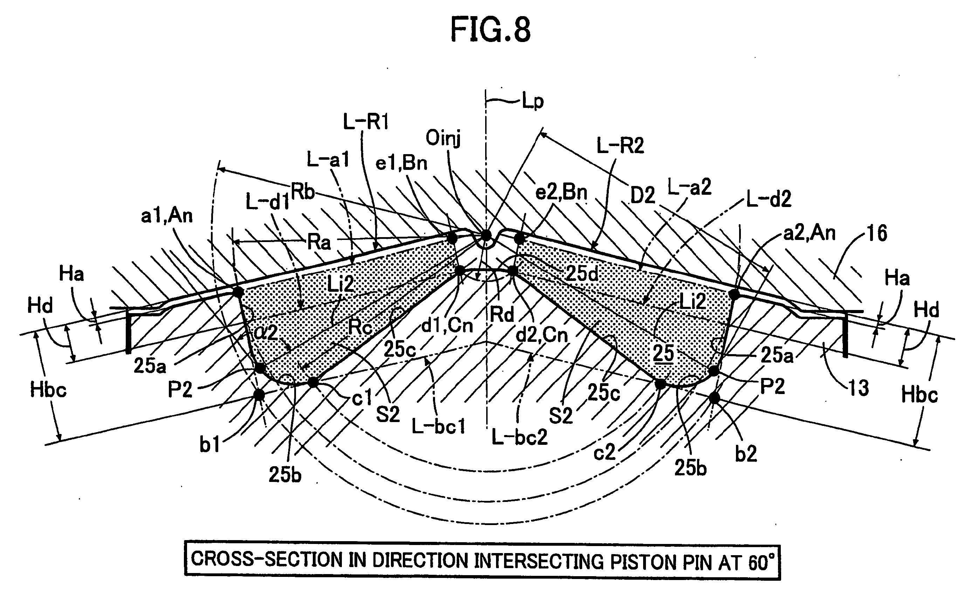

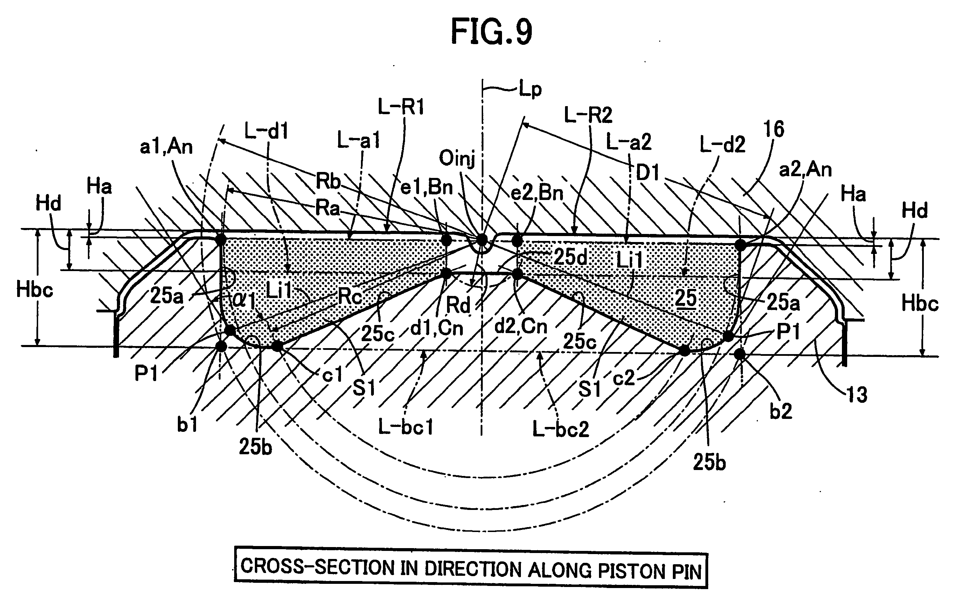

The fuel injector 23, which is disposed along the piston central axis Lp, injects fuel in six directions spaced at intervals of 60° in the circumferential direction with a fuel injection point Oinj, which is a virtual point on the piston central axis Lp, as the center. Among six fuel injection axes, two first fuel injection axes Li1 overlap the piston pin 14 when viewed in the piston central axis Lp direction, and the other four second fuel injection axes Li2 intersect the piston pin 14 direction at angles of 60º. Furthermore, when viewed in a direction perpendicular to the piston central axis Lp, the six first and second fuel injection axes Li1 and Li2 are inclined obliquely downward, the degree of downward inclination being small for the first fuel injection axes Li1 and large for the second fuel injection axes Li2 (see FIG. 8 and FIG. 9).

An injection point at which the fuel injector 23 actually injects fuel is slightly displaced radially outward from the piston central axis Lp, but the fuel injection point Oinj is defined as a point where the first and second fuel injection axes Li1 and Li2 intersect the piston central axis Lp.

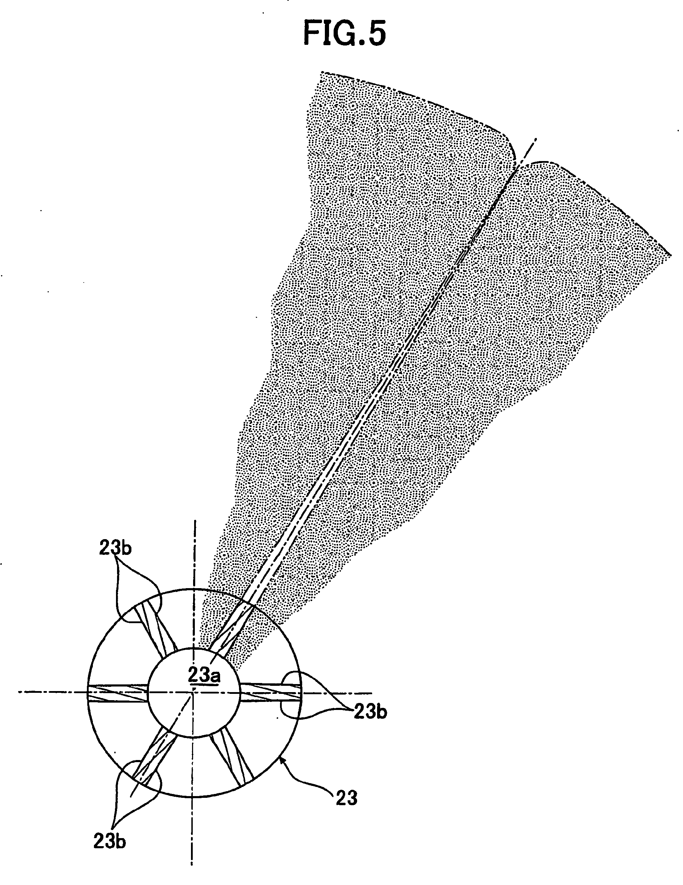

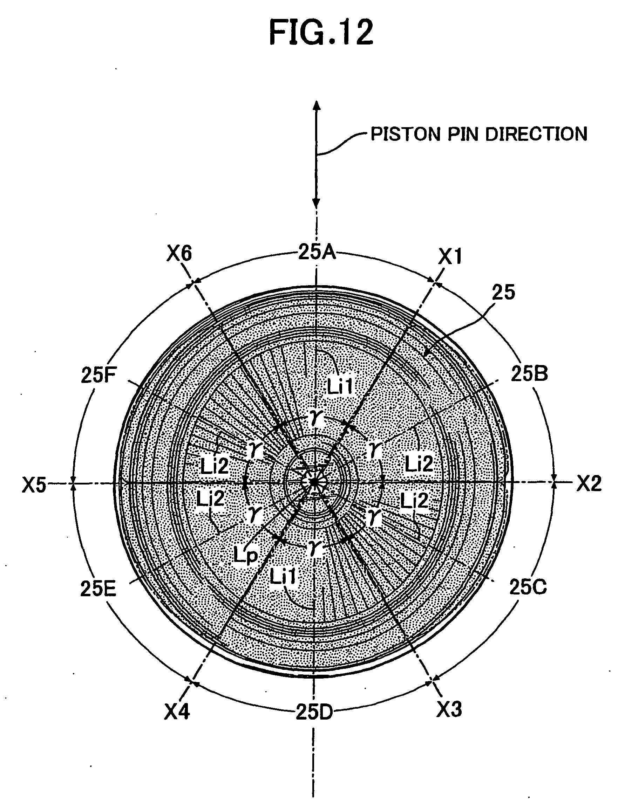

As shown enlarged in FIG. 4 and FIG. 5, six fuel injection holes 23b are formed at intervals of 60° in an extremity portion 23a of the fuel injector 23, which projects toward the piston 13 side from the lower face of the cylinder head 16. The cross-sectional shape of each fuel injection hole 23b is a long hole that is long in the circumferential direction (an oval shape or a racetrack shape), and a fuel spray angle viewed in the piston central axis Lp direction is set at 60º, which is wider than usual (see FIG. 12).

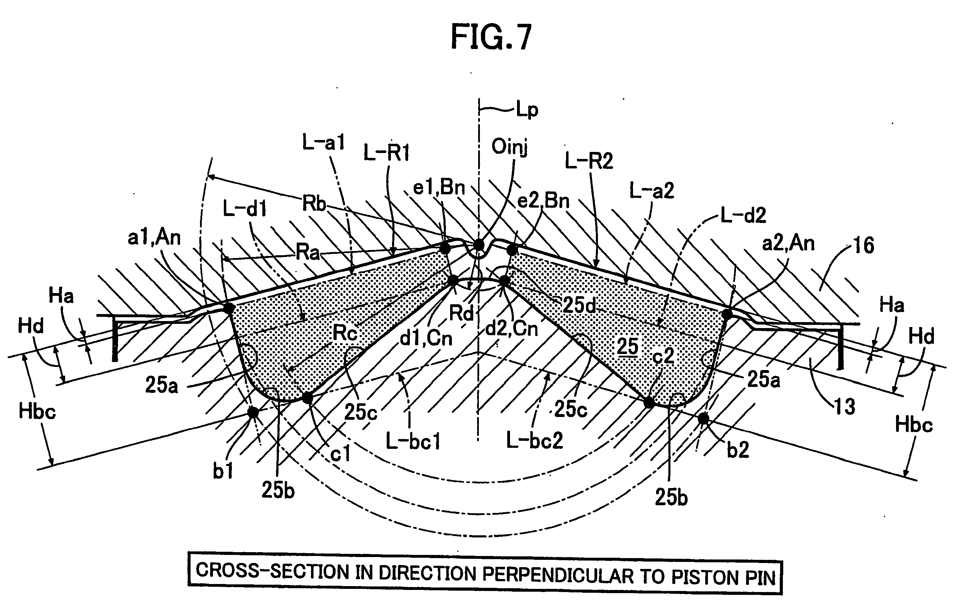

The cross-sectional shape of a cavity 25 of the invention of the prior application (JP-A-2008-002443, corresponding to EP-A-2034157) is now explained in detail by reference to FIG. 7 to FIG. 9. The reason why the cross-sectional shape of the cavity 25 of the invention of the prior application is explained is that the cross-sectional shape of the cavity 25 of the invention of the present application is obtained by correcting the cross-sectional shape of the cavity 25 of the invention of the prior application. FIG. 7 is a cross-section in a direction perpendicular to the piston pin 14, FIG. 8 is a cross-section in a direction that intersects the piston pin 14 at 60° (cross-section containing second fuel injection axis Li2), and FIG. 9 is a cross-section in a direction along the piston pin 14 (cross-section containing first fuel injection axis Li1).

The invention of the prior application aims to make the shape of the cavity 25 as far as possible the same for any cross-section passing through the piston central axis Lp. The cross-sectional shape of the cavity 25 is divided into two, that is left and right portions, sandwiching the piston central axis Lp; the two portions are substantially linearly connected in the cross-section in the piston pin 14 direction in FIG. 9, but are connected in a peak shape in accordance with the pentroof shape of the piston 13 in the cross-section in a direction perpendicular to the piston pin 14 in FIG. 7 and in the cross-section in a direction that intersects the piston pin 14 at 60° in FIG. 8. Essential parts of the cross-sectional shape of the cavity 25, that is the shaded portions in FIG. 7 to FIG. 9, are exactly the same.

As is clear from FIG. 7 to FIG. 9, the cavity 25 formed with the piston central axis Lp as the center axis is formed by a peripheral wall portion 25a extending linearly downward from the top face of the piston 13, a curved wall portion 25b curving in a concave shape from the lower end of the peripheral wall portion 25a toward the piston central axis Lp, a bottom wall portion 25c extending linearly obliquely upward from the radially inner end of the curved wall portion 25b toward the piston central axis Lp, and a top portion 25d connected to the radially inner end of the bottom wall portion 25c on the piston central axis Lp.

Lines extending parallel to and spaced only by a distance Ha downward from lines L-R1 and L-R2 denoting the lower face of the cylinder head 16 facing the cavity 25 are defined as piston top face baselines L-a1 and L-a2. Similarly, lines extending parallel to and spaced only by a distance Hbc downward from the lines L-R1 and L-R2 denoting the lower face of the cylinder head 16 are defined as cavity bottom face baselines L-bc1 and L-bc2, and lines extending parallel to and spaced only by a distance Hd downward from the lines L-R1 and L-R2 denoting the lower face of the cylinder head 16 are defined as cavity top portion baselines L-d1 and L-d2.

Intersection points of an arc having a radius Ra and the fuel injection point Oinj as the center with the piston top face baselines L-a1 and L-a2 are defined as a1 and a2. Similarly, intersection points of an arc having a radius Rb and the fuel injection point Oinj as the center with the cavity bottom face baselines L-bc1 and L-bc2 are defined as b1 and b2, intersection points of an arc having a radius Rc and the fuel injection point Oinj as the center with the cavity bottom face baselines L-bc1 and L-bc2 are defined as c1 and c2, and intersection points of an arc having a radius Rd and the fuel injection point Oinj as the center with the cavity top portion baselines L-d1 and Led2 are defined as d1 and d2. Intersection points e1 and e2 are points at which perpendicular lines from the intersection points d1 and d2 to the piston top face baselines L-a1 and L-a2 intersect the piston top face baselines L-a1 and L-a2.

The peripheral wall portion 25a of the cavity 25 is on the straight line a1b1 or a2b2, the bottom wall portion 25c of the cavity 25 coincides with the straight line c1d1 or c2d2, and the curved wall portion 25b of the cavity 25 smoothly connects the straight line a1b1 or a2b2 and the straight line c1d1 or c2d2.

The shape of the cavity 25 is set so that the shaded cross-sectional shape defined by the intersection points a1 c1 d1, and e1 or the intersection points a2, c2, d2, and e2 is equal for any cross-section that passes through the piston central axis Lp.

The intersection points a1 and a2 correspond to a first specific point An of the present invention, the intersection points e1 and e2 correspond to a second specific point Bn of the present invention, and the intersection points d1 and d2 correspond to a third specific point Cn of the present invention.

With regard to the cross-sections that pass along the first and second fuel injection axes Li1 and Li2 shown in FIG. 8 and FIG. 9, the shaded portion in the cross-section (fuel injection cross-section S1) in the piston pin 14 direction shown in FIG. 9 and the shaded portion in the cross-section (fuel injection cross-section S2) in a direction that intersects the piston pin 14 at 60º shown in FIG. 8 have an identical shape.

In the cross-section in the piston pin 14 direction shown in FIG. 9, a point at which the first fuel injection axis Li1 intersects the cavity 25 is defined as a fuel collision point P1, and in the cross-section in a direction that intersects the piston pin 14 at 60º shown in FIG. 8 a point at which the second fuel injection axis Li2 intersects the cavity 25 is defined as a fuel collision point P2. The two fuel collision points P1 and P2 are present at the same positions of the shaded cross-sections having identical shapes. Therefore, the position of the fuel collision point P2 is lower than the position of the fuel collision point P1, and the second fuel injection axis Li2 extending from the fuel injection point Oinj injects fuel further downward than the first fuel injection axis Li1.

A distance D1 from the fuel injection point Oinj to the fuel collision point P1 is substantially the same as a distance D2 from the fuel injection point Oinj to the fuel collision point P2. Furthermore, a fuel collision angle α1 formed by a tangent to the cavity 25 at the fuel collision point P1 and the first fuel injection axis Li1 is substantially the same as a fuel collision angle α2 formed by a tangent to the cavity 25 at the fuel collision point P2 and the second fuel injection axis Li2.

As hereinbefore described, in accordance with the invention of the prior application, with regard to any cross-section that passes through the piston central axis Lp, the cross-sectional shapes of the cavity 25, excluding a very small part in the vicinity of the fuel injection point Oinj (region surrounded by intersection points e1, d1, d2, and e2), are formed so as to be identical. In particular, with regard to the two cross-sections containing the first and second fuel injection axes Li1 and Li2 (see FIG. 8 and FIG. 9), since the cross-sectional shapes of the cavity 25 are formed so as to be identical and, moreover, the distances D1 and D2 from the fuel injection point Oinj to the fuel collision points P1 and P2 in the two cross-sections are set so as to be substantially equal and the fuel collision angles α1 and α2 at the fuel collision points P1 and P2 are set so as to be substantially equal, the conditions under which air and fuel are mixed in each portion of the cavity 25 are made uniform in the circumferential direction, thus improving the combustion conditions for the gas mixture, increasing the engine output, and reducing harmful exhaust substances.

Furthermore, in the cross-sections in which the top face of the piston 13 is inclined as shown in FIG. 7 and FIG. 8, since the angle formed by the edge of the opening of the cavity 25 (portion at intersection point a2) is not made acute compared with a case in which the top face of the piston 13 is flat as shown in FIG. 9, it is possible to reduce the thermal load of this portion and improve the heat resistance.

In the invention of the prior application, the cross-sectional shapes of the cavity 25 in FIG. 7 to FIG. 9 are exactly the same in the shaded portions, but vary in the white regions surrounded by the intersection points e1, d1 d2, and e2 in the vicinity of the fuel injection point Oinj. The reason therefor is that two portions sandwiching the piston central axis Lp in the cross-sectional shape of the cavity 25 are connected in a substantially straight line in the cross-section in the piston pin 14 direction in FIG. 9, but in the cross-section in a direction perpendicular to the piston pin 14 in FIG. 7 and in the cross-section in a direction intersecting the piston pin 14 at 60° in FIG. 8, they are connected in a peak shape in accordance with the pentroof shape of the piston 13. The area of the white region surrounded by the intersection points e1, d1, d2, and e2 is the largest in the cross-section in the piston pin 14 direction in FIG. 9, decreases in the cross-section in the direction intersecting the piston pin 14 at 60° in FIG. 8, and further decreases in the cross-section in the direction perpendicular to the piston pin 14 in FIG. 7.

This embodiment makes the conditions under which air and fuel are mixed more uniform in cross-sections in all directions of the cavity 25 by correcting, with as a reference the cross-sectional shape (see FIG. 9) of the cavity 25 in the piston pin 14 direction in which the area of the white region surrounded by the intersection points e1, d1, d2, and e2 is a maximum, the cross-sectional shape in other directions so that it enlarges (that is increasing in directions in which the depth of the cavity 25 increases), thus compensating for the difference in the area between the white regions surrounded by the intersection points e1, d1, d2, and e2.

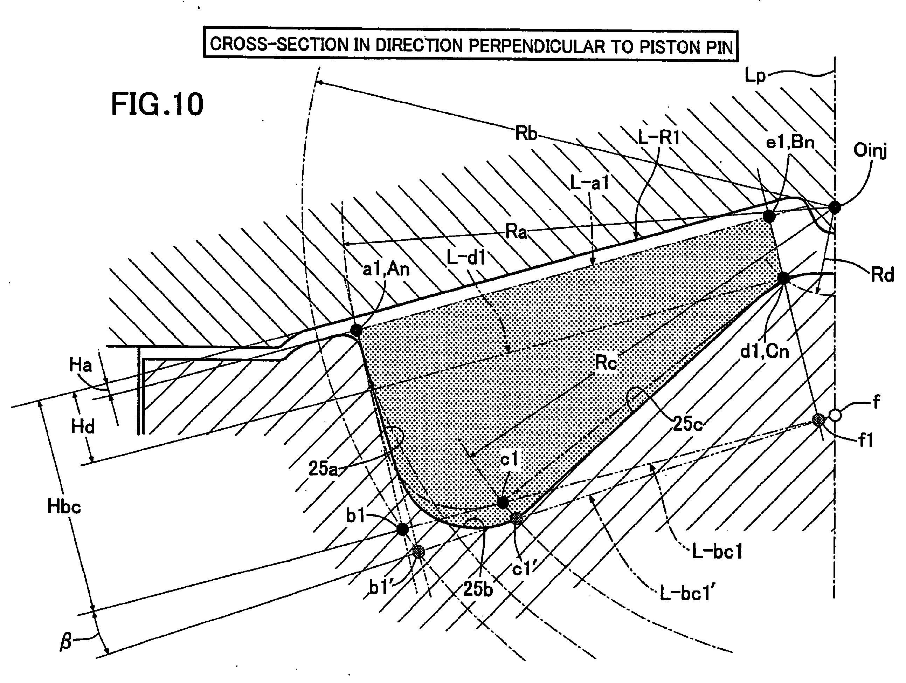

FIG. 10 explains a method for correcting the cross-sectional shape of the cavity 25 in the direction perpendicular to the piston pin 14 in FIG. 7; the shape denoted by a broken line corresponds to the invention of the prior application, and the shape denoted by a solid line corresponds to the present embodiment.

Correction of the cross-sectional shape of the cavity 25 in accordance with the present embodiment is carried out by moving the positions of the intersection point b1 and the intersection point c1 downward to an intersection point b1' and an intersection point c1', respectively, so as to increase the area of the shaded portion.

First, an intersection point between the cavity bottom face baseline L-bc1 and a downward extension of the straight line e1d1 is defined as f1. Subsequently, the cavity bottom face baseline L-bc1, which passes through the intersection point f1, is rotated downward only by a predetermined angle β with the intersection point f1 as the center, and a new cavity bottom face baseline L-bc1' is thus set. Subsequently, an intersection point between the arc having a radius Rb with the fuel injection point Oinj as the center and the new cavity bottom face baseline L-bc1' is defined as the above b1', and an intersection point between the arc having a radius Rc with the fuel injection point Oinj as the center and the new cavity bottom face baseline L-bc1' is defined as the above c1'.

In the cross-sectional shape of the cavity 25 after correction, the peripheral wall portion 25a of the cavity 25 is on the straight line a1lb1', the bottom wall portion 25c of the cavity 25 coincides with the straight line c1'd1, and the curved wall portion 25b of the cavity 25 smoothly connects the straight line a1b1' and the straight line c1'd1.

In addition, an intersection point between the cavity bottom face baseline L-bc1 and the piston central axis Lp is defined as f, and by rotating the cavity bottom face baseline L-bc1 downward by the predetermined angle β with the intersection point f as the center, the new cavity bottom face baseline L-bc1' may be determined.

Although, of the path AnCn on an inner wall face of the cavity 25, a section from the lowest part of the path AnCn to the third specific point Cn is close to the second fuel injection axis Li2, by changing the shape of the section in this way it is possible to suppress attachment of fuel to the inner wall face of the cavity 25, thus preventing degradation of combustion.

In this embodiment, net mean effective pressure, NMEP, is improved by on the order of 2% relative to the invention of the prior application in a state in which soot is not generated.

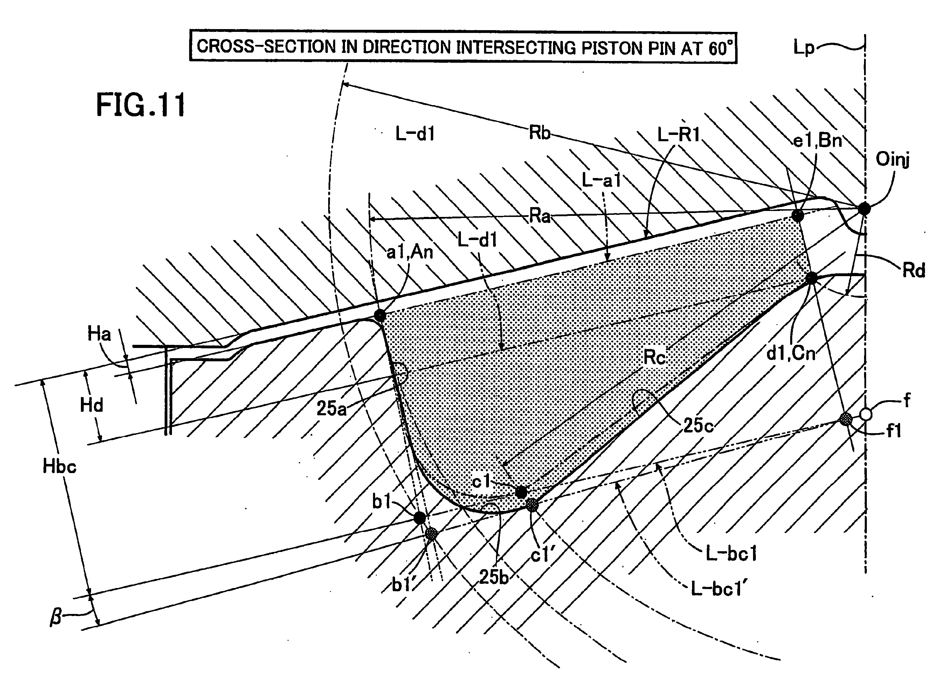

FIG. 11 explains a method for correcting the cross-sectional shape of the cavity 25 in a direction that intersects the piston pin 14 at 60º in FIG. 8; the shape denoted by a broken line corresponds to the invention of the prior application, and the shape denoted by a solid line corresponds to the present embodiment.

Since, compared with the difference in white area surrounded by the intersection points e1, d1, d2, and e2 between FIG. 9 (piston pin 14 direction) and FIG. 7 (direction perpendicular to the piston pin 14), the difference in this area between FIG. 9 (piston pin 14 direction) and FIG. 8 (direction intersecting the piston pin 14 at 60°) is small, the amount of enlargement in the cross-sectional shape of the cavity 25 in FIG. 11 (direction intersecting the piston pin 14 at 60°) is smaller than the amount of enlargement in the cross-sectional shape of the cavity 25 in FIG. 10 (direction perpendicular to the piston pin 14).

Correction of the cross-sectional shape of the cavity 25 on one side of the piston central axis Lp is explained above, and correction of the cross-sectional shape of the cavity 25 on the other side of the piston central axis Lp is carried out in exactly the same manner.

As hereinbefore described, in accordance with this embodiment, the problem of the invention of the prior application, that is the difference in cross-sectional shape of the cavity 25 in the region surrounded by the intersection points e1, d1, d2, and e2 in the vicinity of the fuel injection point Oinj, can be compensated for, and it is therefore possible to make the conditions under which air and fuel are mixed in each portion of the cavity 25 more uniform in the circumferential direction, improve the combustion conditions for the gas mixture, further increase the engine output, and further reduce harmful exhaust materials.

FIG. 12 is a view for explaining, from another viewpoint, correction of the cross-sectional shape of the cavity 25 in accordance with the present embodiment.

In this figure, six half planes X1 to X6 extend radially from the piston central axis Lp passing through the center of the cavity 25. Angles (included angles) formed by two adjacent half planes X1 to X6 are all 60°, and six bisectors that bisect the half planes X1 to X6 overlap the first and second fuel injection axes Li1 and Li2 when viewed in the piston central axis Lp direction. The cavity 25 is divided into six virtual cavity sections 25A to 25F by the six half planes X1 to X6 and, in accordance with this embodiment, due to the above-mentioned correction of the cross-sectional shape of the cavity 25, it is theoretically possible to set the volumes of the six cavity sections 25A to 25F so as to be identical.

However, it is not necessary to set the volumes of the six cavity sections 25A to 25F so as to be completely identical; even if they are only set so as to be substantially identical it is possible to make the conditions under which fuel is mixed more uniform in the circumferential direction compared with the invention of the prior application. Specifically, by making the variation in volume of the six cavity sections 25A to 25F, that is the difference in volume between the maximum volume cavity section and the minimum volume cavity section, small compared with the invention of the prior application, it is possible to make the conditions under which fuel is mixed in the circumferential direction more uniform.

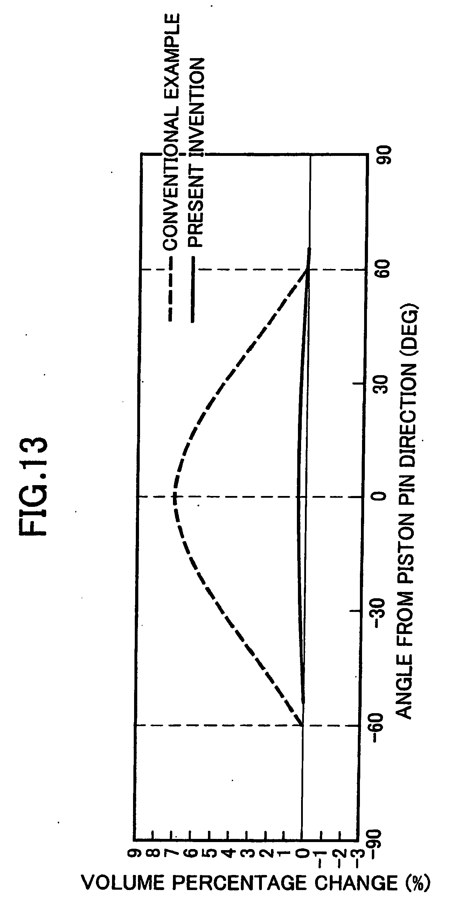

FIG. 13 shows the percentage change in volume of the cavity section when the direction of the cavity section (i.e. direction of the bisector of the included angle of the cavity section) is moved in a range of 60° to both left and right of the piston central axis Lp with the piston pin 14 direction as a reference (0º). The broken line corresponds to the conventional example, and the solid line corresponds to the present embodiment.

In all cases, the point when the direction of the bisector of the included angle of the cavity section intersects the piston pin 14 direction at 60º (ref. cavity sections 25B, 25C, 25E, and 25F in FIG. 12) is taken as a reference, and the percentage change at that point is defined as 0%. In the conventional example shown by the broken line, when the direction of the bisector of the included angle of the cavity section coincides with the piston pin 14 direction (ref. cavity sections 25A and 25D in FIG. 12), the percentage change is a maximum of on the order of 7%, but in the embodiment shown by the solid line, although the percentage change is a maximum at the same position, the value is greatly reduced and is suppressed to only 0.5%.

One definition of the invention of the present application can be that the variation in volume of the cavity sections 25A to 25F is smaller than the variation in volume of the cavity sections 25A to 25F of the conventional example in which the depth of the cavity is made uniform in the circumferential direction'.

As is clear from FIG. 12, since the number, that is six, of virtual cavity sections 25A to 25F is set so as to be equal to the number, that is six, of fuel injection axes Li1 and Li2 of the fuel injector 23, the bisector of the included angle is made to coincide with the fuel injection axes Li1 and Li2 when viewed in the piston central axis Lp direction, and a fuel spray angle γ of the fuel injection axes Li1 and Li2 is made to coincide with the included angle, the spray angle of the fuel injected along the central line of the equal volume cavity sections 25A to 25F is equal to the included angle of the cavity sections 25A to 25F. This eliminates a region within the cavity 25 where fuel is not sprayed or a region where fuel is sprayed overlappingly, and due to the synergistic effect with the cavity sections 25A to 25F being made to have equal volumes, it is possible to make the conditions under which air and fuel are mixed in the cavity 25 more uniform, thus improving the engine output and reducing harmful exhaust materials.

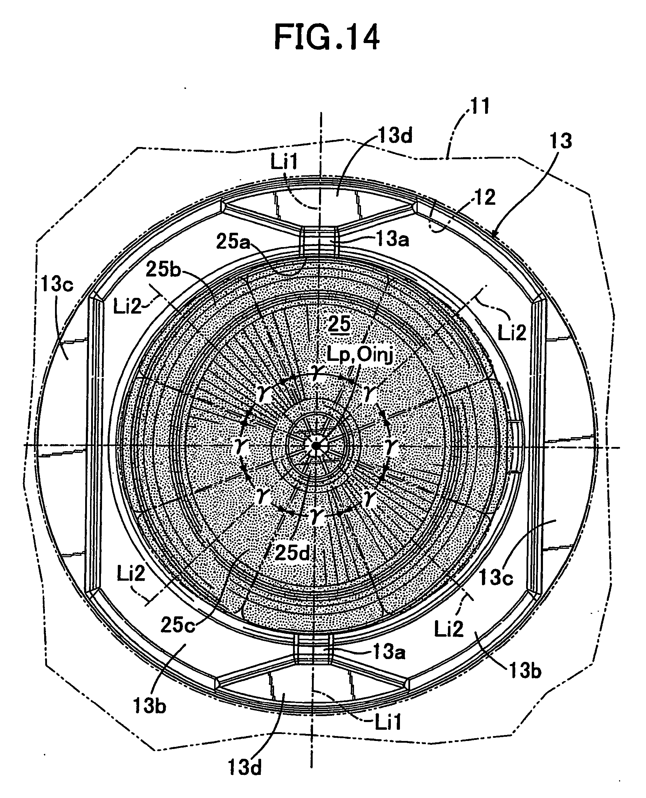

A second embodiment of the present invention is now explained by reference to FIG. 14.

In the first embodiment, the number of virtual cavity sections 25A to 25F is set at six (N = 6), but in the second embodiment the number of virtual cavity sections is set at eight (N = 8). Therefore, the number of fuel injection axes becomes eight, the angle formed by adjacent fuel injection axes becomes 45°, and a fuel spray angle γ of each fuel injection axis becomes 45º.

In accordance with this second embodiment, the same effects as those of the first embodiment described above can be achieved.

A third embodiment of the present invention is now explained by reference to FIG. 15 to FIG. 19.

As is clear from FIG. 15, FIG. 18, and FIG. 19, a fuel injector 23 disposed along a piston central axis Lp injects fuel in twelve directions spaced at intervals of 30º in the circumferential direction with a fuel injection point Oinj, which is a virtual point on the piston central axis Lp, as the center. Among twelve fuel injection axes, two first fuel injection axes Li1 are superimposed on a piston pin 14 when viewed in the piston central axis Lp direction, four second fuel injection axes Li2 intersect the piston pin 14 direction at 60º, and six third fuel injection axes Li3 are oriented toward the centers between the total of six first fuel injection axes Li1 and second fuel injection axes Li2. Furthermore, when viewed in a direction perpendicular to the piston central axis Lp, the twelve first, second, and third fuel injection axes Li1, Li2, and Li3 are inclined obliquely downward, and the degree of downward inclination is larger the further it is from the piston pin 14 direction. Therefore, the two third fuel injection axes Li3, which are oriented in a direction perpendicular to a piston pin axis L2, are most downwardly inclined.

As shown enlarged in FIG. 16 and FIG. 17, six large diameter fuel injection holes 23d corresponding to the first and second fuel injection axes Li1 and Li2 are formed at intervals of 60º in an extremity portion 23a of the fuel injector 23, which projects toward a piston 13 side from a lower face of a cylinder head 16, and six small diameter fuel injection holes 23e corresponding to the six third fuel injection axes Li3 are formed at middle positions between the six large diameter fuel injection holes 23d. The cross-sectional shapes of the fuel injection holes 23d and 23e are circular, but the diameter of the large diameter fuel injection holes 23d is larger than the diameter of the small diameter fuel injection holes 23e, and the penetration (distance reached) of fuel injected via the large diameter fuel injection holes 23d is larger than the penetration (distance reached) of fuel injected via the small diameter fuel injection holes 23e.

As is clear from FIG. 15, fuel injected along the first and second fuel injection axes Li1 and Li2 via the six large diameter fuel injection holes 23d collides with an inner face of a cavity 25 and spreads in the circumferential direction, and the size of penetration is set so that fuel injected along the first and second fuel injection axes Li1 and Li2 does not overlap in the circumferential direction with fuel injected along adjacent first and second fuel injection axes Li1 and Li2 after colliding with the inner face of the cavity 25. Moreover, excluding an outer peripheral part, fuel injected along the first and second fuel injection axes Li1 and Li2 does not spread to the entire cavity 25, and six unsprayed regions are produced, but by injecting fuel via the six small diameter fuel injection holes 23e so that it is oriented toward the unsprayed regions, it is possible to eliminate areas where fuel spray does not spread in the whole area of the cavity 25, prevent fuel spray injected via the large diameter fuel injection holes 23d from overlapping with fuel spray injected via the small diameter fuel injection holes 23e, make the conditions under which air and fuel are mixed in the cavity 25 more uniform by minimizing unused air, and improve the engine output and reduce harmful exhaust materials due to a synergistic effect with cavity sections 25A to 25F being made to have equal volumes.

A fourth embodiment of the present invention is now explained by reference to FIG. 20.

In the third embodiment, the number of virtual cavity sections 25A to 25F is set at six (N = 6), but in the fourth embodiment, the number of virtual cavity sections is set at four (N = 4). The number, that is four, of fuel injection axes Li1 (2) corresponding to four large diameter fuel injection holes 23d therefore becomes four, at intervals of 90º, and four fuel injection axes Li3 corresponding to four small diameter fuel injection holes 23e are disposed between the four fuel injection axes Li1 (2).

A fifth embodiment of the present invention is now explained by reference to FIG. 21.

In the third embodiment, the number of virtual cavity sections 25A to 25F is set at six (N = 6), but in the fifth embodiment the number of virtual cavity sections is set at five (N = 5). The number, that is five, of fuel injection axes Li1 (2) corresponding to five large diameter fuel injection holes 23d therefore becomes five, at intervals of 72º, and five fuel injection axis Li3 corresponding to five small diameter fuel injection holes 23e are disposed between the five fuel injection axes Li1 (2).

A sixth embodiment of the present invention is now explained by reference to FIG. 22.

The sixth embodiment is a modification of the fourth embodiment; in the fourth embodiment, between each of the four large diameter fuel injection holes 23d one, that is a total of four, small diameter fuel injection holes 23e are formed, but in the sixth embodiment, between each of four large diameter fuel injection holes 23d two, that is a total of eight small diameter fuel injection holes 23e are formed.

In accordance with these fourth to sixth embodiments, the same effects as those of the third embodiment described above can be achieved.

Embodiments of the present invention are explained above, but the present invention may be modified in a variety of ways as long as the modifications do not depart from the sprit and scope thereof.

For example, in the embodiments, the number of virtual cavity sections is set at four, five, six, or eight (N = 4, N = 5, N = 6, or N = 8), but the number of cavity sections may be two or more (N is a natural number of 2 or more).

Furthermore, in the embodiments, the volume of the virtual cavity sections 25A to 25F does not include the volume of a portion sandwiched between the lower face of the cylinder head 16 and the top face of the piston 13 when at top dead center, and is defined as the volume up to the opening edge of the cavity 25 (that is the volume below the piston top face baselines L-a1 and L-a2), but even if a volume including this portion is defined as the volume of the virtual cavity sections 25A to 25F, the same operational effects can be exhibited.

Moreover, in the embodiments, an explanation is given for a diesel engine, but the invention of the present application is not limited to a diesel engine and may be applied to any type of engine in which fuel is directly injected into a combustion chamber.

The object is to provide a direct fuel injection engine equipped with a pentroof-shaped piston, the conditions under which air and fuel are mixed within a cavity being made uniform in the circumferential direction. In order to do so, when a cavity 25 recessed in a central part of a top face of a piston is divided into six virtual cavity sections 25A to 25F, each having an included angle of 60º, by six half planes X1 to X6, the volumes of the cavity sections 25A to 25F are made substantially equal, the number of cavity sections, which is six, is made equal to the number of fuel injection axes Li1 and Li2, and when viewed in a piston central axis Lp direction the bisectors of the included angles of the cavity sections 25A to 25F are made to coincide with the fuel injection axes Li1 and Li2 and, moreover, a fuel spray angle γ of the fuel injection axes Li1 and Li2 is made to coincide with the included angle. It is thereby possible to minimize unused air in the cavity 25 and make the conditions under which air and fuel are mixed uniform in the circumferential direction, thus improving the engine output and reducing harmful exhaust materials.

## Claims

1. A direct fuel injection engine comprising a piston (13) having a top face formed in a pentroof shape with a height, in a piston central axis (Lp) direction, that varies in the circumferential direction, a cavity (25) recessed in a central part of the top face of the piston (13), and a fuel injector (23) for injecting fuel into the cavity (25),
the shape of an inner wall face of the cavity (25) being set so that, with N as a natural number of 2 or more, when the cavity (25) is divided into N virtual cavity sections (25A to 25F) by the inner wall face of the cavity and N half planes (X₁ to X₆) extending radially from the piston central axis (Lp) and having equal included angles,
the number N of virtual cavity sections (25A to 25F) being set so as to be equal to the number of fuel injection axes (Li1, Li2) of the fuel injector (23), the bisector of the included angle coinciding with the fuel injection axis when viewed in the piston central axis (Lp) direction, and
a fuel spray angle (y) of the fuel injection axes (Li1, Li2) coinciding with the included angle,
**characterized in that**
the difference between the volumes of the virtual cavity sections (25A to 25F) are equal or lower than 0,5%,
and where the volume of each virtual cavity section (25A to 25F) is made substantially equal by changing the depth of the inner wall face of the cavity (25).

2. The direct fuel injection engine according to claim 1, wherein
among a plurality of fuel injection axes (Li1, Li2) spaced in the circumferential direction of the fuel injector (23), a cross-section of the cavity (25) passing through an nth fuel injection axis (Li1, Li2) is defined as a fuel injection cross-section Sn,
an intersection point of the fuel injection cross-section Sn with the opening peripheral edge of the cavity (25) is defined as a first specific point An,
a second specific point Bn is present on a line that passes through the first specific point An and is parallel to a lower face of a cylinder head (16) in the fuel injection cross-section Sn,
a third specific point Cn is present on a bottom wall portion of the cavity (25) in the fuel injection cross-section Sn,
a distance between the second specific point Bn and the piston central axis (Lp) is shorter than a distance between the first specific point An and the piston central axis (Lp),
a distance between the third specific point Cn and the piston central axis (Lp) is shorter than a distance between the piston central axis (Lp) and the maximum outer diameter of the bottom wall portion (25c) of the cavity (25),
and a cross-sectional shape surrounded by a first specific path AnBn connecting the first and second specific points An and Bn, a line along the lower face of the cylinder head (16) in the fuel injection cross-section Sn, a second specific path AnCn connecting the first and third specific points An and Cn along a wall face of the cavity (25) in the fuel injection cross-section Sn, and a third specific path BnCn connecting the second and third specific points Bn and Cn by the shortest straight line, which is substantially equal for each fuel injection cross-section Sn, is defined as a reference cross-sectional shape which enlarges for the fuel injection cross-section Sn passing through a fuel injection axis (Li1, Li2) that is present in a direction where the height of the top face of the piston (13) in the piston central axis (Lp) direction is lower.

3. The direct fuel injection engine according to claim 1,
wherein the fuel injector (23) comprises a plurality of fuel injection holes (23d, 23e) having different inner diameters, the plurality of fuel injection holes (23d, 23e) comprising at least two large diameter fuel injection holes (23d) having high penetration and at least one small diameter fuel injection hole (23e) that has a smaller diameter than that of the large diameter fuel injection hole (23d) and has low penetration, and the small diameter fuel injection hole (23e) being disposed between two of the large diameter fuel injection holes (23d) that are adjacent in the circumferential direction.

4. The direct fuel injection engine according to Claim 3, wherein the number of large diameter fuel injection holes (23d) provided is N, which is the same as the number of virtual cavity sections (25A to 25F), when viewed in the piston central axis (Lp) direction each large diameter fuel injection hole (23d) is oriented in the direction of the bisector of the included angle of the corresponding virtual cavity section (25A to 25F), and the small diameter fuel injection hole (23e) is oriented between two directions oriented by large diameter fuel injection holes (23d) that are adjacent in the circumferential direction.

5. The direct fuel injection engine according to Claim 3 or Claim 4, wherein the small diameter fuel injection hole (23e) is provided at the middle position between the circumferentially adjacent large diameter fuel injection holes (23d).

6. The direct fuel injection engine according to Claim 3 or Claim 4, wherein a plurality of small diameter fuel injection holes (23e) are provided between the circumferentially adjacent large diameter fuel injection holes (23d).

7. The direct fuel injection engine according to Claim 1, further comprising a piston pin (14), wherein among the fuel injection axes (Li1, Li2), two first fuel injection axes (Li1) overlap the piston pin (14) when viewed in the piston central axis (Lp) direction.

## Patentansprüche

1. Motor mit direkter Kraftstoffeinspritzung, umfassend einen Kolben (13), dessen Oberseite in einer Dachform ausgebildet ist, deren Höhe sich in Richtung einer Kolbenmittelachse (Lp) in der Umfangsrichtung ändert, eine Mulde (25), die in einem Mittelteil der Oberseite des Kolbens (13) vertieft ist, und einen Kraftstoffinjektor (23) zum Einspritzen von Kraftstoff in die Mulde (25),
wobei die Form einer Innenwandfläche der Mulde (25) so gelegt ist, dass, wobei N eine natürliche Zahl von 2 oder mehr ist, wenn die Mulde (25) durch die Innenwandfläche der Mulde und N Halbebenen (X₁ bis X₆), die sich radial von der Kolbenmittelachse (Lp) erstrecken und gleiche Einschlusswinkel aufweisen, in N virtuelle Muldenabschnitte (25a bis 25F) unterteilt ist,
die Anzahl N der virtuellen Muldenabschnitte (25A bis 25F) so gelegt ist, dass sie gleich der Anzahl von Kraftstoffeinspritzachsen (Li1, Li2) des Kraftstoffinjektors (23) ist, wobei, bei Betrachtung in Richtung der Kolbenmittelachse (Lp), die Halbierende des Einschlusswinkels mit der Kraftstoffeinspritzachse zusammenfällt, und
ein Kraftstoffsprühwinkel (γ) der Kraftstoffeinspritzachsen (Li1, Li2) mit dem Einschlusswinkel zusammenfällt,
**dadurch gekennzeichnet, dass**
der Unterschied zwischen den Volumina der virtuellen Muldenabschnitte (25A bis 25F) gleich oder kleiner als 0,5% ist,
und wobei durch Ändern der Tiefe der Innenwandfläche der Mulde (25) das Volumen jedes virtuellen Muldenabschnitts (25A bis 25F) im Wesentlichen gleich gemacht ist.

2. Der Motor mit direkter Kraftstoffeinspritzung nach Anspruch 1, worin unter einer Mehrzahl von Kraftstoffeinspritzachsen (Li1, Li2), die in der Umfangsrichtung des Kraftstoffinjektors (23) mit Abstand voneinander angeordnet sind, ein durch eine n-te Kraftstoffachse (Li1, Li2) hindurch gehender Querschnitt der Mulde (25) als Kraftstoffeinspritzquerschnitt Sn definiert ist,
ein Schnittpunkt des Kraftstoffeinspritzquerschnitts Sn mit dem offenen Umfangsrand der Mulde (25) als erster spezifischer Punkt An definiert ist,
ein zweiter spezifischer Punkt Bn auf einer Linie liegt, die durch den ersten spezifischen Punkt An hindurchgeht und parallel zu einer Unterseite eines Zylinderkopfs (16) in dem Kraftstoffeinspritzquerschnitt Sn ist,
ein dritter spezifischer Punkt Cn auf einem Bodenwandabschnitt der Mulde (25) in dem Kraftstoffeinspritzquerschnitt Sn liegt,
ein Abstand zwischen dem zweiten spezifischen Punkt Bn und der Kolbenmittelachse (Lp) kürzer ist als ein Abstand zwischen dem ersten spezifischen Punkt An und der Kolbenmittelachse (Lp),
ein Abstand zwischen dem dritten spezifischen Punkt Cn und der Kolbenmittelachse kürzer ist als ein Abstand zwischen der Kolbenmittelachse (Lp) und dem maximalen Ausβendurchmesser des Bodenwandabschnitts (25c) der Mulde (25),
und eine Querschnittsform, die umgeben ist von einem ersten spezifischen Weg AnBn, der die ersten und zweiten spezifischen Punkte An und Bn verbindet, einer Linie entlang der Unterseite des Zylinderkopfs (16) in dem Kraftstoffeinspritzquerschnitt Sn, einem zweiten spezifischen Weg AnCn, der die ersten und dritten spezifischen Punkte An und Cn entlang einer Wandfläche der Mulde (25) in dem Kraftstoffeinspritzquerschnitt Sn verbindet, und einen dritten spezifischen Weg BnCn, der die zweiten und dritten spezifischen Punkte Bn und Cn durch die kürzeste gerade Linie verbindet, die für jeden Kraftstoffeinspritzquerschnitt Sn im Wesentlichen gleich ist, als Referenzquerschnittsform definiert ist, die sich für den Kraftstoffeinspritzquerschnitt Sn erweitert, der durch eine Kraftstoffeinspritzachse (Li1, Li2) hindurchgeht, die in einer Richtung liegt, wo die Höhe der Oberseite des Kolbens (13) in Richtung der Kolbenmittelachse (Lp) niedriger ist.

3. Der Motor mit direkter Kraftstoffeinspritzung nach Anspruch 1, worin der Kraftstoffinjektor (23) eine Mehrzahl von Kraftstoffeinspritzlöchern (23d, 23e) mit unterschiedlichen Innendurchmessern aufweist, wobei die Mehrzahl der Kraftstoffeinspritzlöcher (23d, 23e) zumindest zwei Kraftstoffeinspritzlöcher (23d) mit großem Durchmesser und hoher Eindringung und zumindest ein Kraftstoffeinspritzloch (23e) mit kleinem Durchmesser, das einen kleineren Durchmesser hat als jenen des Kraftstoffeinspritzlochs (23d) mit großem Durchmesser und eine geringe Eindringung hat, aufweist, und wobei das Kraftstoffeinspritzloch (23e) mit kleinem Durchmesser zwischen zweien der Kraftstoffeinspritzlöcher (23d) mit großem Durchmesser, die in der Umfangsrichtung benachbart sind, angeordnet ist.

4. Der Motor mit direkter Kraftstoffeinspritzung nach Anspruch 3, worin die Anzahl der Kraftstoffeinspritzlöcher (23d) mit großem Durchmesser N ist, die gleich der Anzahl der virtuellen Muldenquerschnitte (25A bis 25F) ist, wobei, bei Betrachtung in Richtung der Kolbenmittelachse (Lp), jedes Kraftstoffeinspritzloch (23d) mit großem Durchmesser in Richtung der Halbierenden des Einschlusswinkels des entsprechenden virtuellen Muldenquerschnitts (25A bis 25F) orientiert ist, und das Kraftstoffeinspritzloch (23e) mit kleinem Durchmesser zwischen zwei Richtungen, die durch die Kraftstoffeinspritzlöcher (23d) mit großem Durchmesser orientiert sind, die in der Umfangsrichtung benachbart sind, orientiert ist.

5. Der Motor mit direkter Kraftstoffeinspritzung nach Anspruch 3 oder Anspruch 4, worin das Kraftstoffeinspritzloch (23e) mit kleinem Durchmesser an der Mittelposition zwischen den umfangsmäßig benachbarten Kraftstoffeinspritzlöchern (23d) mit großem Durchmesser vorgesehen ist.

6. Der Motor mit direkter Kraftstoffeinspritzung nach Anspruch 3 oder Anspruch 4, worin eine Mehrzahl von Kraftstoffeinspitzlöchern (23e) mit kleinem Durchmesser zwischen den umfangsmäßig benachbarten Kraftstoffeinspritzlöchern (23d) mit großem Durchmesser vorgesehen sind.

7. Der Motor mit direkter Kraftstoffeinspritzung nach Anspruch 1, der ferner einen Kolbenbolzen (14) aufweist, wobei, bei Betrachtung in Richtung der Kolbenmittelachse (Lp), unter den Kraftstoffeinspritzachsen (Li1, Li2) zwei erste Kraftstoffeinspritzachsen (Li1) den Kolbenbolzen (14) überlappen.

## Revendications

1. Moteur à injection directe de carburant comprenant un piston (13) présentant une face supérieure en forme d'auvent avec une hauteur, dans une direction d'axe central de piston (Lp), qui varie dans la direction circonférentielle, une cavité (25) évidée dans une partie centrale de la face supérieure du piston (13), et un injecteur de carburant (23) destiné à injecter du carburant dans la cavité (25),
la forme d'une face de paroi intérieure de la cavité (25) étant réglée de sorte qu'avec N comme nombre naturel de 2 ou plus, lorsque la cavité (25) est divisée en N sections de cavité virtuelles (25A à 25F) par la face de paroi intérieure de la cavité et N demi-plans (X₁ à X₆) s'étendant dans le sens radial depuis l'axe central de piston (Lp) et ayant des angles d'ouverture égaux,
le nombre N de sections de cavité virtuelles (25A à 25F) étant réglé de sorte à être égal au nombre d'axes d'injection de carburant (Li1, Li2) de l'injecteur de carburant (23), la bissectrice de l'angle d'ouverture coïncidant avec l'axe d'injection de carburant vu dans la direction de l'axe central de piston (Lp), et
un angle de pulvérisation de carburant (y) des axes d'injection de carburant (Li1, Li2) coïncidant avec l'angle d'ouverture,
**caractérisé en ce**
**que** la différence entre les volumes des sections de cavité virtuelles (25A à 25F) est égale ou inférieure à 0,5 %,
et dans lequel le volume de chaque section de cavité virtuelle (25A à 25F) est sensiblement égalisé en modifiant la profondeur de la face de paroi intérieure de la cavité (25).

2. Moteur à injection directe de carburant selon la revendication 1, dans lequel
parmi une pluralité d'axes d'injection de carburant (Li1, Li2) espacés dans la direction circonférentielle de l'injecteur de carburant (23), une section transversale de la cavité (25) passant par un *n^{ème}* axe d'injection de carburant (Li1, Li2) est définie comme une section transversale d'injection de carburant Sn,
un point d'intersection de la section transversale d'injection de carburant Sn avec l'arête périphérique d'ouverture de la cavité (25) est défini comme premier point spécifique An,
un deuxième point spécifique Bn est présent sur une ligne qui passe par le premier point spécifique An et est parallèle à une face inférieure d'une tête de cylindre (16) dans une section transversale d'injection de carburant Sn,
un troisième point spécifique Cn est présent sur une partie de paroi inférieure de la cavité (25) dans la section transversale d'injection de carburant Sn,
une distance entre le deuxième point spécifique Bn et l'axe central de piston (Lp) est plus courte qu'une distance entre le premier point spécifique An et l'axe central de piston (Lp),
une distance entre le troisième point spécifique Cn et l'axe central de piston (Lp) est plus courte qu'une distance entre l'axe central de piston (Lp) et le diamètre extérieur maximal de la partie de paroi inférieure (25c) de la cavité (25),
et une forme de section transversale entourée par une première voie spécifique AnBn reliant les premier et deuxième points spécifiques An et Bn, une ligne le long de la face inférieure de la tête de cylindre (16) dans la section transversale d'injection de carburant Sn, une deuxième voie spécifique AnCn reliant les premier et troisième points spécifiques An et Cn le long d'une face de paroi de la cavité (25) dans la section transversale d'injection de carburant Sn, et une troisième voie spécifique BnCn reliant les deuxième et troisième points spécifiques Bn et Cn par la ligne droite la plus courte qui est sensiblement égale pour chaque section transversale d'injection de carburant Sn, est définie comme forme de section transversale de référence qui s'agrandit pour le passage de la section transversale d'injection de carburant Sn passant par un axe d'injection de carburant (Li1, Li2) qui est présent dans une direction, dans laquelle la hauteur de la face supérieure du piston (13) dans la direction de l'axe central de piston (Lp) est plus basse.

3. Moteur à injection directe de carburant selon la revendication 1,
dans lequel l'injecteur de carburant (23) comprend une pluralité de trous d'injection de carburant (23d, 23e) dotés de différents diamètres intérieurs, la pluralité de trous d'injection de carburant (23d, 23e) comprenant au moins deux trous d'injection de carburant de grand diamètre (23d) ayant une pénétration élevée et au moins un trou d'injection de carburant de petit diamètre (23e), dont le diamètre est plus petit que celui du trou d'injection de carburant de grand diamètre (23d) et présente une pénétration basse, et le trou d'injection de carburant de petit diamètre (23e) étant disposé entre deux des trous d'injection de carburant de grand diamètre (23d) qui sont adjacents dans la direction circonférentielle.

4. Moteur à injection directe de carburant selon la revendication 3, dans lequel le nombre de trous d'injection de carburant de grand diamètre (23d) prévus est N qui est le même que le nombre de sections de cavité virtuelles (25A à 25F), vu dans la direction de l'axe central de piston (Lp) chaque trou d'injection de carburant de grand diamètre (23d) est orienté dans la direction de la bissectrice de l'angle d'ouverture de la section de cavité virtuelle correspondante (25A à 25F), et le trou d'injection de carburant de petit diamètre (23e) est orienté entre deux directions orientées par des trous d'injection de carburant de grand diamètre (23d) qui sont adjacents dans la direction circonférentielle.

5. Moteur à injection directe de carburant selon la revendication 3 ou 4, dans lequel le trou d'injection de carburant de petit diamètre (23e) est prévu sur la position médiane entre les trous d'injection de carburant de grand diamètre adjacents dans la direction circonférentielle (23d).

6. Moteur à injection directe de carburant selon la revendication 3 ou 4, dans lequel une pluralité de trous d'injection de carburant de petit diamètre (23e) est prévue entre les trous d'injection de carburant de grand diamètre adjacents dans la direction circonférentielle (23d).

7. Moteur à injection directe de carburant selon la revendication 1, comprenant en outre un axe de piston (14), dans lequel parmi les axes d'injection de carburant (Li1, Li2), deux premiers axes d'injection de carburant (Li1) chevauchent l'axe de piston (14), vu dans la direction de l'axe central de piston (Lp).
